# EUROPEAN PATENT SPECIFICATION

(11) **EP 4 589 920 B1**
(45) Date of publication and mention of the grant of the patent: **04.11.2026**
(21) Application number: 23864762.2
(22) Date of filing: 14.09.2023
(51) Int. Cl.: H04L 65/60

(54) **DECODING METHOD AND APPARATUS, DATA TRANSMISSION METHOD AND APPARATUS, TERMINAL, AND SERVER**
DECODIERUNGSVERFAHREN UND -VORRICHTUNG, DATENÜBERTRAGUNGSVERFAHREN UND -VORRICHTUNG, ENDGERÄT UND SERVER
PROCÉDÉ ET APPAREIL DE DÉCODAGE, PROCÉDÉ ET APPAREIL DE TRANSMISSION DE DONNÉES, TERMINAL ET SERVEUR

(30) Priority: 16.09.2022 CN 202211127820
(43) Date of publication of application: 23.07.2025
(73) Proprietor: Vivo Mobile Communication Co., Ltd., Dongguan, Guangdong 523863 (CN)
(72) Inventor: SHAO, Shengjun, Dongguan, Guangdong 523863 (CN)
(74) Representative: Lavoix
(86) International application number: PCT/CN2023/118839
(87) International publication number: WO 2024/056032

(56) References cited:
- CN-A- 1 645 787
- CN-A- 101 119 249
- CN-A- 101 668 027
- CN-A- 106 850 595
- CN-A- 115 484 240
- US-A1- 2010 017 673
- US-A1- 2014 112 120

## Description

### TECHNICAL FIELD

This application relates to the field of video transmission technologies, and in particular, to a decoding method and apparatus, a data transmission method and apparatus, a terminal, and a server.

### BACKGROUND

In a video conference scenario, to ensure a time relevancy of audio/video, a real-time transport protocol (RTP) audio/video data packet and a real-time transport control protocol (RTCP) control packet are simultaneously transmitted through an underlying user datagram protocol (UDP). The transmission of the UDP is unreliable. Sent data cannot be ensured to arrive at a destination, and especially in case of a network jitter or a weak network, data is severely lost. To ensure continuity of sound and fluency of a video, a client and a server resolve the problem of data loss through packet loss retransmission.

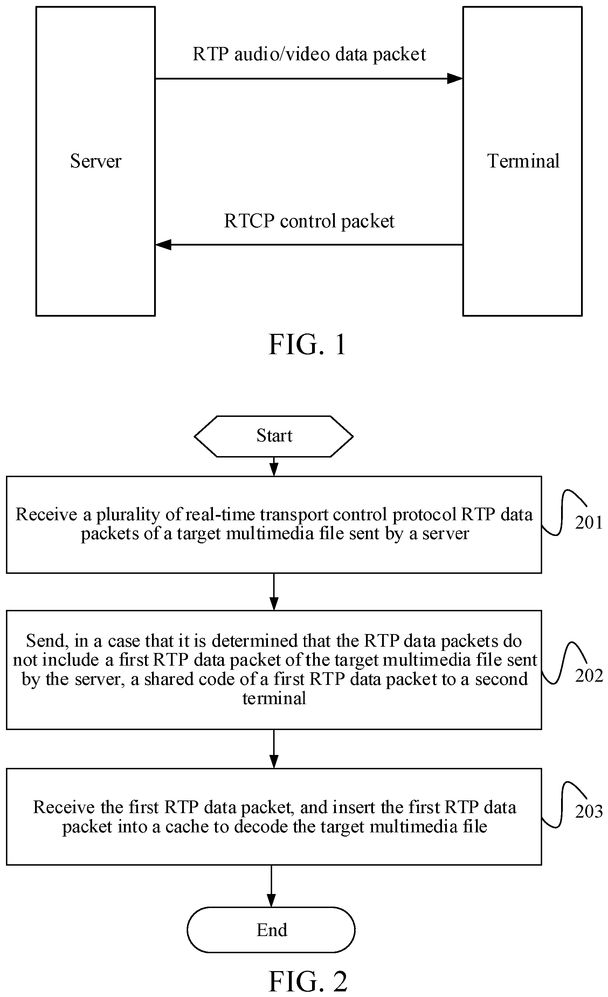

The server issues audio/video to a terminal. The terminal provides, to the server through the RTCP protocol, feedback on how quality of service of the issued audio/video, as shown in FIG. 1.

However, in case of poor network quality, in a case that the terminal cannot successfully receive the data packet, the terminal needs to request the server to retransmit the data packet. In a case that a plurality of terminals simultaneously request the server to retransmit data packets, the server is caused to be overloaded, and the terminals are also caused to fail to timely obtain the lost data packets and fail to ensure smooth playback of a video. CN101119249A discloses a data downloading method.

### SUMMARY

Embodiments of this application provide a decoding method and apparatus, a data transmission method and apparatus, a terminal, and a server, which can resolve a problem that a plurality of terminals cannot timely obtain lost data packets and cannot ensure smooth playback of a video as a result of an overload of a server caused by retransmission of the data packets requested by the terminals from the server.

The present invention is defined in the accompanying claims.

In embodiments of this application, in a case that it is determined that the plurality of received RTP data packets of the target multimedia file sent by the server do not include the first RTP data packet of the target multimedia file sent by the server, the shared code of the first RTP data packet is sent to the second terminal, and the received first RTP data packet sent by the second terminal based on the shared code of the first RTP data packet is inserted into the cache to decode the target multimedia file. In this way, a case in which the terminal cannot timely obtain the lost data packet as a result of an overload of the server caused by requesting retransmission of the data packet from the server can be avoided. Through obtaining of the lost packet from another terminal, it is ensured that the terminal can timely obtain the RTP data packet of the target multimedia file, it is ensured that the target multimedia file can be decoded to obtain the complete target multimedia file, so as to ensure smooth playback of the target multimedia file.

### BRIEF DESCRIPTION OF THE DRAWINGS

FIG. 1 is a schematic diagram of an interaction process between a server and a terminal;
FIG. 2 is a schematic flowchart of a decoding method according to an embodiment of this application;
FIG. 3 is a schematic diagram of a communication process among a first terminal, a second terminal, and a server;
FIG. 4 is a schematic structural diagram of an RTP data packet;
FIG. 5 is a schematic diagram of a position at which a shared code computing module is located;
FIG. 6 is a schematic flowchart of a data transmission method according to an embodiment of this application;
FIG. 7 is a schematic diagram of modules of a decoding apparatus according to an embodiment of this application;
FIG. 8 is a schematic diagram of a simple structure of a terminal of an embodiment of this application;
FIG. 9 is a structural block diagram of a terminal according to an embodiment of this application;
FIG. 10 is a schematic diagram of modules of a data transmission apparatus according to an embodiment of this application; and
FIG. 11 is a structural block diagram of a server according to an embodiment of this application.

### DETAILED DESCRIPTION

Technical solutions in embodiments of this application are clearly described below with reference to drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in this specification and the claims of this application are used for distinguishing between similar objects, rather than describing a specific sequence or order. It should be understood that data used in this way may be transposed where appropriate, so that embodiments of this application described herein may be implemented in an order different from those illustrated or described herein. In addition, the objects distinguished by "first", "second", and the like are generally of the same class and do not limit a quantity of objects. For example, one or more first objects may be arranged. In addition, "and/or" used in this specification and the claims indicates at least one of connected objects. The character "/" generally indicates an "or" relationship between associated objects.

A decoding method and apparatus, a data transmission method and apparatus, a terminal, and a server provided in embodiments of this application are described below in detail through specific embodiments and application scenarios with reference to the drawings.

As shown in FIG. 2, a decoding method in this embodiment of this application includes the following steps:

Step 201: Receive a plurality of real-time transport protocol RTP data packets of a target multimedia file sent by a server. A protocol header of each of the RTP data packets carries a shared code corresponding to the RTP data packet.

It should be noted that the shared code is used for indicating an arrangement sequence number of the RTP data packet in the target multimedia file, and the shared code corresponding to the RTP data packet is determined by the server based on an initial value of an obtained shared code corresponding to the target multimedia file.

Step 202: Send, in a case that it is determined that the RTP data packets do not include a first RTP data packet of the target multimedia file sent by the server, a shared code of the first RTP data packet to a second terminal.

It should be noted that a first terminal and the second terminal jointly receive the RTP data packets of the target multimedia file sent by the server.

Step 203: Receive the first RTP data packet, and insert the first RTP data packet into a cache to decode the target multimedia file. The first RTP data packet is sent by the second terminal based on the shared code of the first RTP data packet.

It should be noted that, in a case that it is determined that the plurality of received RTP data packets of the target multimedia file sent by the server do not include the first RTP data packet of the target multimedia file sent by the server, the shared code of the first RTP data packet is sent to the second terminal, and the received first RTP data packet sent by the second terminal based on the shared code of the first RTP data packet is inserted into the cache to decode the target multimedia file. In this way, it can be ensured that the terminal can obtain the complete RTP data packet of the target multimedia file in a case that the data packet is lost, so as to ensure smooth playback of the target multimedia file. In addition, the manner can further avoid a case in which the server is overloaded as a result of retransmission of data packets requested by a plurality of terminals from the server.

It should be noted that, the target multimedia file described in this embodiment of this application refers to a multimedia service performed by the first terminal together with other terminals including the second terminal. The multimedia service may be an audio service and/or a video service, for example, a plurality of terminals making a video call together. The video may be understood as a video that is jointly shared by the plurality of terminals, and may also be referred to as a shared video.

In this embodiment of this application, by transmitting to the second terminal the shared code of the RTP data packet which the first terminal has not received, because a same video stream adopts a set of shared codes (that is, the RTP data packet lost by the first terminal determined by the second terminal by using the shared code is consistent with the RTP data packet lost by the first terminal determined by the server by using a packet sequence of the RTP data packet), it can be ensured that the first terminal can re-obtain the lost RTP data packet from a channel other than the server, and be ensured that the terminal can decode and obtain the complete video stream.

Optionally, to ensure that the first terminal can communicate with the second terminal, in at least one embodiment of this application, before the first terminal sends the shared code of the first RTP data packet to the second terminal, the method further includes the following steps:
Step 200: Establish a connection with the second terminal in a case that a packet loss rate of the first terminal satisfies a first condition.

The first condition includes that the packet loss rate is greater than or equal to a first preset threshold.

In some embodiments of this application, the establishing a connection with the second terminal in a case that a packet loss rate of the first terminal satisfies a first condition may mean that in a case that the first terminal determines that the packet loss rate thereof is greater than or equal to the first preset threshold, the first terminal immediately establishes the connection with the second terminal. Certainly, to avoid erroneous determining of the first terminal, the first terminal may further establish the connection with the second terminal after a duration in which the packet loss rate is greater than or equal to the first preset threshold is greater than or equal to a first duration. In this case, it may be understood that the first condition simultaneously includes that the packet loss rate is greater than or equal to the first preset threshold, and the duration in which the packet loss rate is greater than or equal to the first preset threshold lasts is greater than or equal to the first duration.

Optionally, the first preset threshold and the first duration may be configured, pre-configured, or agreed by a protocol.

Optionally, in at least one embodiment of this application, an implementation of step 200 includes the following steps:
Step 2001: Receive information about at least one terminal sent by the server.

It should be noted that a packet loss rate of each of the at least one terminal is less than or equal to a second preset threshold.

Optionally, the second preset threshold may be configured, pre-configured, or agreed by a protocol.

It should be noted that, in general, all terminals accessing the target multimedia file each need to obtain a packet loss rate of the terminal based on a plurality of received RTP data packets and an unreceived RTP data packet. In other words, the packet loss rate is equal to a quantity of unreceived RTP data packets dividing by (a quantity of received RTP data packets plus the quantity of unreceived RTP data packets). Then the packet loss rate is sent to the server. The server selects, among all of the terminals, the terminal with which the packet loss rate is less than or equal to the second preset threshold, and then sends information about the terminal to the first terminal. The information about the terminal sent by the server to the first terminal may be an identifier (for example, a terminal index) of the terminal, or an IP port address of the terminal.

Step 2002: Select the second terminal from the at least one terminal in a case that the packet loss rate of the first terminal satisfies the first condition.

Step 2003: Establish the connection with the second terminal.

The establishing the connection with the second terminal may be understood as performing P2P hole punching. Successful hole punching by the first terminal for the second terminal indicates a successful connection from the first terminal to the second terminal.

Optionally, during the selection of the second terminal, the first terminal may order a plurality of other terminals based on the packet loss rates, and select, in ascending order of packet loss rate, a terminal with a lowest packet loss rate first, and attempt to connect to the terminal. After being successfully connected to the terminal with the lowest packet loss rate, the first terminal does not attempt to connect to the other terminals. in a case that the first terminal fails to connect to the terminal with the lowest packet loss rate, the first terminal selects a terminal with a secondary lowest packet loss rate and attempts to connect to the terminal, and so on, until the first terminals successfully establish a connection with a terminal. This manner ensures that the first terminal can be connected to a second terminal with relatively good network quality, thereby increasing a probability of obtaining the complete video stream by the first terminal.

Optionally, in at least one embodiment of this application, an implementation of step 202 includes the following steps:
Step 2021: Determine, based on the plurality of received RTP data packets of the target multimedia file sent by the server, whether the first RTP data packet has not been received.
Step 2022: Send the shared code of the first RTP data packet to the second terminal in a case that the first RTP data packet has not been received.

Optionally, step 2021 is further implemented by determining, based on the shared codes of the plurality of received RTP data packets, that an unreceived first RTP data packet exists in a case that the shared codes of the plurality of RTP packets are not consecutive.

It should be noted that, because the RTP data packets are continuously transmitted in sequence, after the first terminal receives some RTP data packets, the RTP data packets that are not successfully received may be inferred based on the received data packets. This manner can ensure accuracy of an obtained shared code of the lost RTP data packets.

Optionally, the server sends the plurality of RTP data packets to the first terminal and the second terminal. The protocol header of the RTP data packet carries the shared code corresponding to the RTP data packet. The first terminal may determine whether some RTP data packets are lost based on whether shared codes of obtained RTP data packets are consecutive. For example, in a case that the first terminal receives RTP data packets with shared codes of 101, 103, 104, 105, and 106, the first terminal may determine that an RTP data packet with a shared code of 102 has not been received.

It should be further noted that, before sending the plurality of RTP data packets of the target multimedia file to the first terminal and the second terminal, the server needs to obtain the initial value of the shared code corresponding to the target multimedia file first; determines the shared code corresponding to each of the plurality of RTP data packets of the target multimedia file based on the initial value of the shared code, and then sends the plurality of RTP data packets.

Optionally, the initial value of the shared code corresponding to the target multimedia file is obtained by the server by determining the initial value of the shared code corresponding to the target multimedia file based on an initial value of a shared code corresponding to a first multimedia file, a magnitude of a data block of the target multimedia file, a magnitude of the RTP data packet, and a first coefficient, where
the first coefficient is determined by the magnitude of the data block of the target multimedia file and the magnitude of the RTP data packet, and the first multimedia file is a multimedia file that is transmitted before the target multimedia file.

Optionally, based on an equation of v' = v + m/p + r, the server determines the initial value of the shared code corresponding to the target multimedia file. V' is the initial value of the shared code corresponding to the target multimedia file. V is the initial value of the shared code corresponding to the first multimedia file. m is the magnitude of the data block of the target multimedia file, p is the magnitude of the RTP data packet. In a case that m is divisible by p, r = 0. In a case that m is not divisible by p, r = 1.

It should be noted that a unified identifier is allocated to the RTP data packet by adding an indication of the shared code to an extension field of the protocol header of the RTP data packet, to ensure that different terminals have a consistent understanding of the RTP data packet.

Optionally, the protocol header of each RTP data packet sent by the server to the first terminal includes a packet sequence number. The packet sequence number is used for indicating a sequence number of the RTP data packet sent by the server to the first terminal. Since different terminals may access the server at different times, a same data packet sent by the server to different terminals may have different packet sequence numbers. In another embodiment of this application, the first terminal may further send a packet sequence number of the first RTP data packet to the server while sending the shared code of the first RTP data packet to the second terminal. Then the first terminal waits for feedback of the first RTP data packet. In a case that the terminal first receives the first RTP data packet sent by the second terminal, the first terminal inserts the received first RTP data packet sent by the second terminal into the cache to decode the target multimedia file. In a case that the terminal first receives the first RTP data packet retransmitted by the server, the first terminal inserts the received retransmitted first RTP data packet into the cache to decode the target multimedia file. Through simultaneous obtaining of the data packets from the second terminal and the server, ways of obtaining the data packets are increased, and a case in which the terminal cannot timely obtain the lost data packets as a result of an excessive load of the server caused by only requesting the server to retransmit the data packets is avoided, so that it can be ensured that the first terminal can timely obtain the lost data packets, to ensure the smooth playback of the video.

An example in which the plurality of terminals makes a shared video call is used. Specific application of embodiments of this application is described in detail below.

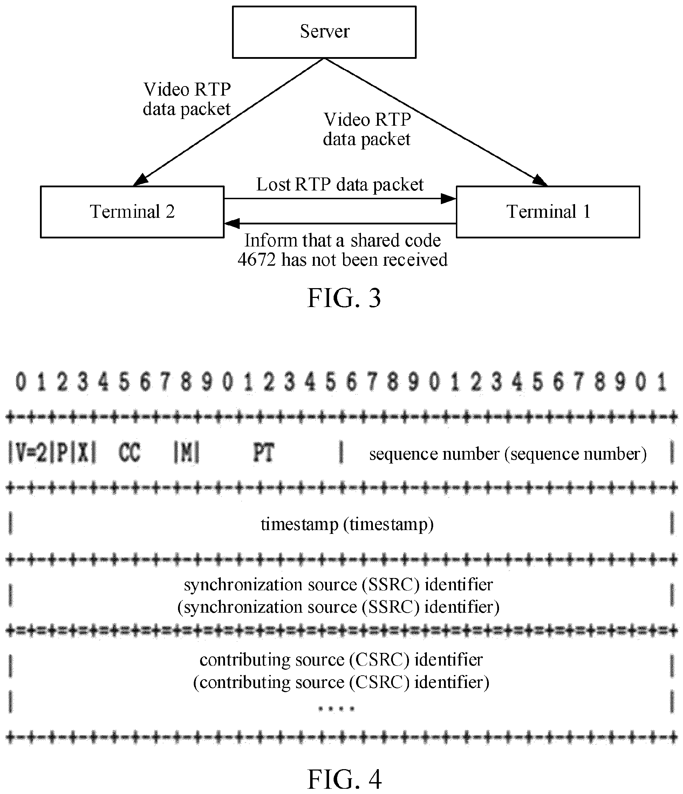

A specific implementation process includes the following steps:
Step I: Determine quality of a network through a packet loss rate (packet loss rate = lost data packets/total data packets). Each of the terminals reports a packet loss situation in real time. A system screens for a few terminals having a lowest packet loss rate less than a certain threshold (for example, less than 5%) at time intervals (for example, 10 s), and then issues IP port information of a terminal satisfying the condition to all terminals (including the terminal satisfying the condition itself).
Step II: Select terminals with a best network in sequence to perform P2P hole punching (which may be understood as attempting to connect to another terminal) in a case that the packet loss rate of a terminal (for example, a terminal 1 in FIG. 3) is continuously greater than a threshold (for example, 20%). In a case that the hole punching succeeds (that is, two terminals may send data to each other), the P2P hole punching performed on a subsequent terminal is stopped.
Step III: A terminal 1 sends, after packet loss, a shared code of the lost data packet to a terminal 2, to obtain the lost data packet from the terminal 2.

It should be noted herein that, in a case that the terminal 1 sends a packet sequence number of the lost data packet to the terminal 2, there is a high probability that the terminal 1 cannot obtain the data from the terminal 2 or the obtained data is incorrect. Reasons are as follows: For example, in a case that the terminal 2 joins a conference first, RTP data packet sequence numbers of the terminal 2 are rotated from 0 to 65535 for a plurality of times in a case that the terminal 1 joins the conference. Although a shared video presented on the terminal 1 just joining the conference is the same as that presented on the terminal 2, a packet sequence number sent to the terminal 1 just starts. Therefore, the packet sequence numbers of the terminal 2 and the terminal 1 are completely different at a same moment. In a case that the packet sequence numbers are very close, an RTP data packet with a same sequence number (the same packet sequence number as a lost packet of the terminal 1) can be found from the terminal 2 as result of caching, but the RTP has different video data. In this case, a problem of how to obtain correct data from the terminal 2 is resolved in this embodiment of this application in four steps.

In step I, a field at the RTP header is extended first. X in FIG. 4 is used for extension, in a case that X = 1 is to extend a field, the extended field is used for recording a sequence number of a shared video packet. To distinguish the field from the RTP data packet sequence number, the sequence number of the extended field is subsequently referred to as a shared code. For another video stream (for example, a camera), the field is 0 by default.

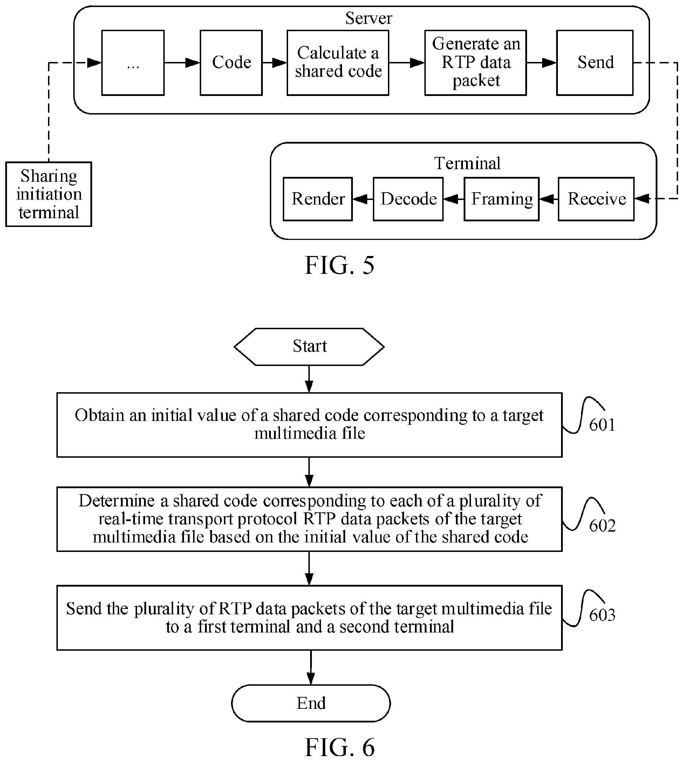

In step II, a module, which may be referred to as a shared code calculation module, is added to process an encoded I frame or p frame (hereinafter referred to as a data block) of the shared video before it is transmitted to an RTP data packet generation module, as shown in FIG. 5. The shared code calculation module does not increase as terminals increase. The shared code calculation module, like a code module, is a shared module. The shared code calculation module has a variable v (which is 0 at startup of the system). The variable records a first initial value of a previous data block. After the data block is transmitted to the shared code calculation module, a second initial value v' of the data block is calculated based on a magnitude of the transmitted data block (the calculation of the variable v' is as follows: v' = v + m/p + r, where m is a magnitude of the data block, p is a magnitude of an RTP video data, in a case that m is divisible by p, r = 0, in a case that m is not divisible by p, r = 1, and in a case that v' is greater than 65535, v' = v' - 65536), and then v' is assigned to v. After the initial value v' and the data block are transmitted to RTP data packet generation modules of all data streams that need the shared video (terminals that watch the shared video), the data block is split to generate the RTP data packets. A shared code of a first generated RTP data packet is the initial value v', and then is increased by 1 each time a RTP packet generated. In a case that a number of the shared code reaches 65535, the number starts from 0 again. In this way, it can be ensured that a shared code and video data of a received shared RTP data packet are the same as those of another terminal as long as a data stream of the shared video is rewatched, regardless of when and where the conference is joined, and regardless of an action (for example, stopping the conference from running in the background, or watching a camera video stream) taken after the conference is joined.

In step III, the terminal finds that the RTP data packet is the data stream of the shared video (which may be determined based on an SSRC field in FIG. 4) after receiving the RTP data packet, places the received data in the cache in sequence, and attempts to perform framing. In addition, the received shared RTP data packet is put into a special shared cache pool (which is used by the another terminal for obtaining lost data). The shared cache pool has a priority order (ordered based on the shared code), and only caches shared data for 2 seconds.

Fourth step: How the terminal 1 finds the terminal 2 and successfully perform the hole punching on the terminal 2 has been described in the previous steps. In a case that a terminal m finds that an RTP data packet with a packet sequence number of 123 (RTP data packets with packet sequence numbers 121 and 124 are received) is lost, and learns that shared codes are respectively 4671 and 4673 by reading extended fields of the packets 121 and 124, a shared code of the lost data packet 123 is 4672. The terminal 1 informs the terminal 2 through a P2P channel that the terminal 1 misses the RTP data packet with the shared code of 4672, as shown in FIG. 3. The terminal 1 receives the RTP data packet from the terminal 2, and inserts the data packet into an ordered cache based on the packet sequence number to decode.

It may be learned from the above that embodiments of this application can achieve the following effects:
Embodiments of this application are mainly applied in a video conference sharing scenario, and solutions of obtaining the lost RTP data packet from another terminal is increased. Therefore, the terminal increases the probability of obtaining the lost RTP data packet, and a speed of obtaining the lost RTP data packet by the terminal is accelerated, thereby ensuring time relevancy and smoothness of the shared video.

Corresponding to the implementation of the first terminal side, as shown in FIG. 6, a data transmission method in this embodiment of this application is performed by a server. The method includes the following steps:
Step 601: Obtain an initial value of a shared code corresponding to a target multimedia file.
Step 602: Determine a shared code corresponding to each of a plurality of real-time transport protocol RTP data packets of the target multimedia file based on the initial value of the shared code.
Step 603: Send the plurality of RTP data packets of the target multimedia file to a first terminal and a second terminal.

A protocol header of the RTP data packet carries a shared code corresponding to the RTP data packet, and the shared code is used for indicating an arrangement sequence number of the RTP data packet in the target multimedia file.

Optionally, the obtaining an initial value of a shared code corresponding to a target multimedia file includes:
determining the initial value of the shared code corresponding to the target multimedia file based on an initial value of a shared code corresponding to a first multimedia file, a magnitude of a data block of the target multimedia file, a magnitude of the RTP data packet, and a first coefficient, where
the first coefficient is determined by the magnitude of the data block of the target multimedia file and the magnitude of the RTP data packet, and the first multimedia file is a multimedia file that is transmitted before the target multimedia file.

In some embodiments of this application, the method further includes:
receiving packet loss rates transmitted by a plurality of terminals; and
sending information about at least one terminal satisfying a second condition to the first terminal, where the second condition includes that each of the packet loss rates is less than or equal to a second preset threshold.

It should be noted that all of the descriptions on the server side in the above embodiments are applicable to the embodiments of the data transmission method applied to the server side, and can achieve the same technical effects. Details are not described herein again.

It should be noted that the method provided in this embodiment of this application may be performed by an apparatus, or a control module configured to perform the method in the apparatus. In embodiments of this application, an apparatus provided in embodiments of this application is described by using an example in which the apparatus performs the method.

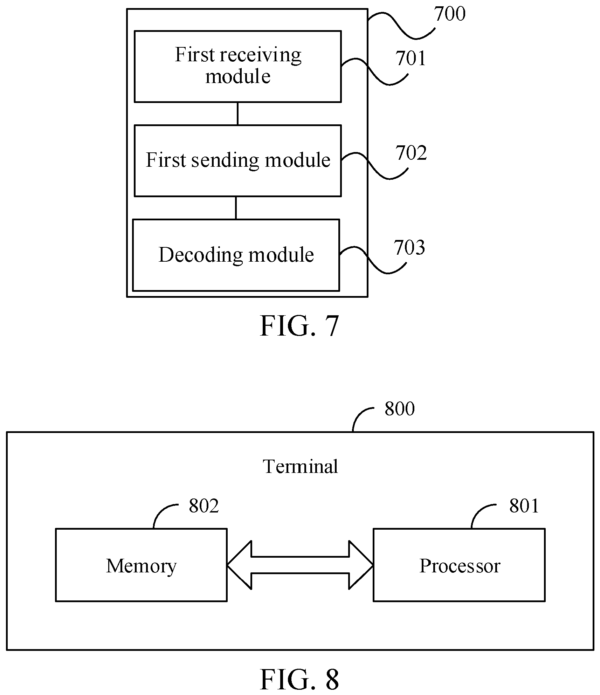

As shown in FIG. 7, an embodiment of this application further provides a decoding apparatus 700. The apparatus is applied to a first terminal, and includes:
a first receiving module 701, configured to receive a plurality of real-time transport protocol RTP data packets of a target multimedia file sent by a server, where a protocol header of each of the RTP data packets carries a shared code corresponding to the RTP data packet, the shared code is used for indicating an arrangement sequence number of the RTP data packet in the target multimedia file, and the shared code corresponding to the RTP data packet is determined by the server based on an initial value of an obtained shared code corresponding to the target multimedia file;
a first sending module 702, configured to send, in a case that it is determined that the RTP data packets do not include a first RTP data packet of the target multimedia file sent by the server, a shared code of the first RTP data packet to a second terminal; and
a decoding module 703, configured to receive the first RTP data packet, and insert the first RTP data packet into a cache to decode the target multimedia file, where the first RTP data packet is sent by the second terminal based on the shared code of the first RTP data packet, where
the first terminal and the second terminal jointly receive the RTP data packets of the target multimedia file sent by the server.

Optionally, the first sending module 702 includes:
a determining unit, configured to determine, based on the plurality of received RTP data packets of the target multimedia file sent by the server, whether the first RTP data packet has not been received; and
a sending unit, configured to send the shared code of the first RTP data packet to the second terminal in a case that the first RTP data packet has not been received.

Optionally, the determining unit is configured to:
determine, based on the shared codes of the plurality of received RTP data packets, that an unreceived first RTP data packet exists in a case that the shared codes of the plurality of RTP packets are not consecutive.

In some embodiments of this application, the apparatus further includes:
a connecting module, configured to establish a connection with the second terminal in a case that a packet loss rate of the first terminal satisfies a first condition, where the first condition includes that the packet loss rate is greater than or equal to a first preset threshold.

In some embodiments of this application, the connecting module includes:
a receiving unit, configured to receive information about at least one terminal sent by the server, where a packet loss rate of each of the at least one terminal is less than or equal to a second preset threshold;
a selection unit, configured to select the second terminal from the at least one terminal in a case that the packet loss rate of the first terminal satisfies the first condition; and
an establishing unit, configured to establish the connection with the second terminal.

It should be noted that the apparatus embodiment is an apparatus corresponding to the above decoding method embodiment applied to the first terminal side. All of the implementations of the above method embodiment are applicable to the apparatus embodiment, and can achieve the same technical effects.

The decoding apparatus in this embodiment of this application may be an apparatus, or may be a component, an integrated circuit, or a chip in a terminal. The apparatus may be a mobile electronic device or a non-mobile electronic device. In an example, the mobile electronic device may be a mobile phone, a tablet computer, a notebook computer, a palm computer, an on-board electronic device, a wearable device, an ultra-mobile personal computer (UMPC), a netbook, a personal digital assistant (PDA), or the like. The non-mobile electronic device may be a server, a network attached storage (NAS), a personal computer (PC), a television (TV), a teller machine, an automated machine, or the like. This is not specifically limited in this embodiment of this application.

The decoding apparatus in this embodiment of this application may be an apparatus having an operating system. The operating system may be Android (Android), IOS, or another possible operating system. This is not specifically limited in this embodiment of this application.

The decoding apparatus provided in this embodiment of this application can implement the processes implemented in the method embodiment of FIG. 2.

Optionally, as shown in FIG. 8, an embodiment of this application further provides a terminal 800. The terminal is a first terminal, and includes a processor 801, a memory 802, a program or instructions stored in the memory 802 and executable by the processor 801. The program or the instructions, when executed by the processor 801, implement the processes of the above decoding method embodiment, and can achieve the same technical effects. To avoid repetition, details are not described herein again.

It should be noted that the terminal in this embodiment of this application includes both the above mobile terminal and the above non-mobile terminal.

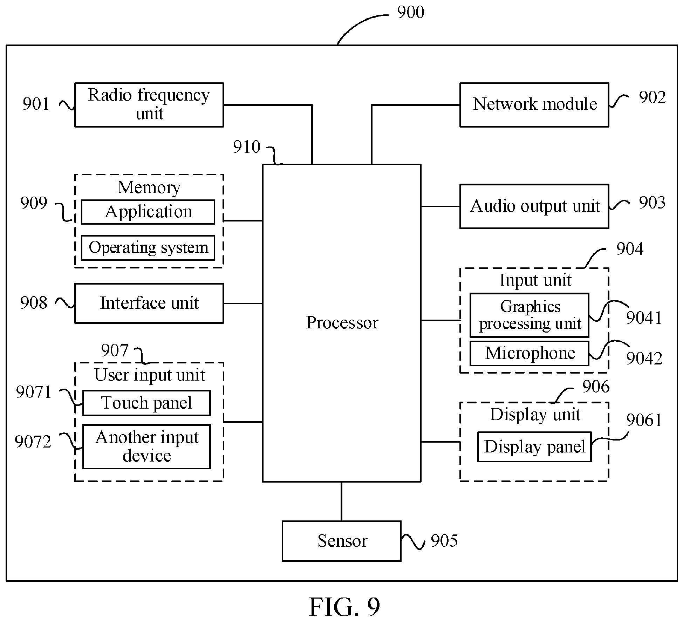

FIG. 9 is a schematic diagram of a hardware structure of a terminal for implementing an embodiment of this application.

The terminal 900 includes but is not limited to components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the terminal 900 may further include a power supply (such as a battery) that supplies power to the components. The power supply may be logically connected to the processor 910 through a power management system, thereby implementing functions such as management of charging, discharging, and power consumption through the power management system. The terminal structure shown in FIG. 9 constitutes no limitation on an electronic device, and the electronic device may include more or fewer components than those shown in the figure, or some merged components, or different component arrangements. Details are not described herein.

Specifically, in a case that the terminal 900 is a first terminal, the radio frequency unit 901 is configured to:
receive a plurality of real-time transport protocol RTP data packets of a target multimedia file sent by a server, where a protocol header of each of the RTP data packets carries a shared code corresponding to the RTP data packet, the shared code is used for indicating an arrangement sequence number of the RTP data packet in the target multimedia file, and the shared code corresponding to the RTP data packet is determined by the server based on an initial value of an obtained shared code corresponding to the target multimedia file; and
send, in a case that it is determined that the RTP data packets do not include a first RTP data packet of the target multimedia file sent by the server, a shared code of the first RTP data packet to a second terminal.

The processor 910 is configured to receive the first RTP data packet, and insert the first RTP data packet into a cache to decode the target multimedia file, where the first RTP data packet is sent by the second terminal based on the shared code of the first RTP data packet, where
the first terminal and the second terminal jointly receive the RTP data packets of the target multimedia file sent by the server.

Optionally, the processor 910 is configured to:
determine, based on the plurality of received RTP data packets of the target multimedia file sent by the server, whether the first RTP data packet has not been received.

The radio frequency unit 901 is configured to:
send the shared code of the first RTP data packet to the second terminal in a case that the first RTP data packet has not been received.

Optionally, the processor 910 is configured to determine, based on the shared codes of the plurality of received RTP data packets, that an unreceived first RTP data packet exists in a case that the shared codes of the plurality of RTP data packets are not consecutive.

In some embodiments of this application, the radio frequency unit 901 is configured to establish a connection with the second terminal in a case that a packet loss rate of the first terminal satisfies a first condition, where the first condition includes that the packet loss rate is greater than or equal to a first preset threshold.

Optionally, the radio frequency unit 901 is configured to receive information about at least one terminal sent by the server, where a packet loss rate of each of the at least one terminal is less than or equal to a second preset threshold.

The processor 910 is configured to select the second terminal from the at least one terminal in a case that the packet loss rate of the first terminal satisfies the first condition.

The radio frequency unit 901 is configured to establish the connection with the second terminal.

In embodiments of this application, in a case that it is determined that the plurality of received RTP data packets of the target multimedia file sent by the server do not include the first RTP data packet of the target multimedia file sent by the server, the shared code of the first RTP data packet is sent to the second terminal, and the received first RTP data packet sent by the second terminal based on the shared code of the first RTP data packet is inserted into the cache to decode the target multimedia file. In this way, a case in which the terminal cannot timely obtain the lost data packet as a result of an overload of the server caused by requesting retransmission of the data packet from the server can be avoided. Through obtaining of the lost packet from another terminal, it is ensured that the terminal can timely obtain the RTP data packet of the target multimedia file, it is ensured that the target multimedia file can be decoded to obtain the complete target multimedia file, so as to ensure smooth playback of the target multimedia file.

It should be noted that, in this embodiment of this application, the input unit 904 may include a graphics processing unit (GPU) 9041 and a microphone 9042. The graphics processing unit 9041 processes image data of a static picture or a video obtained by an image capture apparatus (for example, a camera) in a video capture mode or an image capture mode. The display unit 906 may include a display panel 9061. The display panel 9061 may be configured in a form such as a liquid crystal display or an organic light-emitting diode. The user input unit 907 includes a touch panel 9071 and another input device 9072. The touch panel 9071 is also referred to as a touch screen. The touch panel 971 may include two parts: a touch detection apparatus and a touch controller. The another input device 9072 may include but is not limited to a physical keyboard, a function button (for example, a volume control button or a power button), a trackball, a mouse, and a joystick. Details are not described herein. The memory 909 may be configured to store software programs and various data, including but not limited to applications and an operating system. An application processor and a modem processor may be integrated into the processor 910. The application processor mainly processes an operating system, a user interface, an application, and the like. The modem processor mainly processes wireless communication. It may be understood that the above modem processor may alternatively not be integrated into the processor 910.

An embodiment of this application further provides a readable storage medium. The readable storage medium stores a program or instructions. The program or the instructions, when executed by a processor, implement the processes of the above decoding method embodiment applied to the first terminal side, and can achieve the same technical effects. To avoid repetition, details are not described herein again.

The processor is a processor in the first terminal described in the above embodiments. The readable storage medium includes a computer-readable storage medium, such as a computer read-only memory (ROM), a random access memory (RAM), a magnetic disk, or an optical disc.

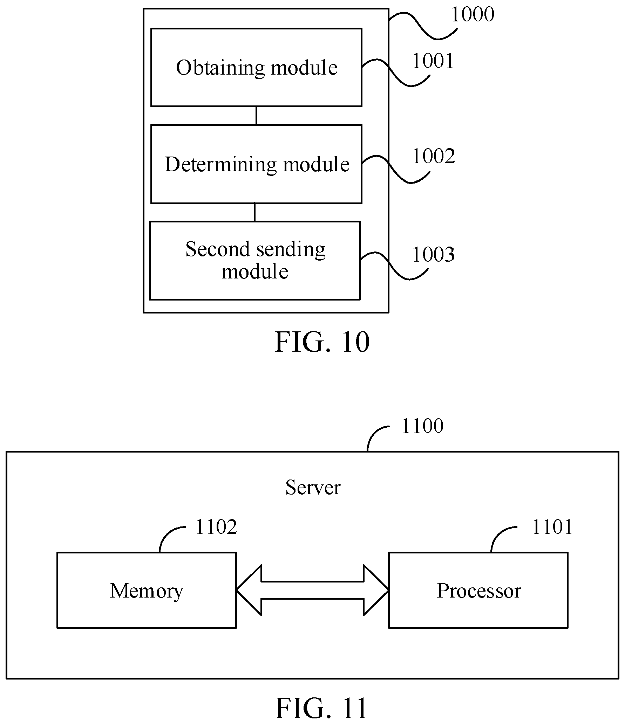

As shown in FIG. 10, an embodiment of this application further provides a data transmission apparatus 1000. The apparatus is applied to a server, and includes:
an obtaining module 1001, configured to obtain an initial value of a shared code corresponding to a target multimedia file;
a determining module 1002, configured to determine a shared code corresponding to each of a plurality of real-time transport protocol RTP data packets of the target multimedia file based on the initial value of the shared code; and
a second sending module 1003, configured to send the plurality of RTP data packets of the target multimedia file to a first terminal and a second terminal, where
a protocol header of the RTP data packet carries a shared code corresponding to the RTP data packet, and the shared code is used for indicating an arrangement sequence number of the RTP data packet in the target multimedia file.

Optionally, the obtaining module 1001 is configured to:
determine the initial value of the shared code corresponding to the target multimedia file based on an initial value of a shared code corresponding to a first multimedia file, a magnitude of a data block of the target multimedia file, a magnitude of the RTP data packet, and a first coefficient, where
the first coefficient is determined by the magnitude of the data block of the target multimedia file and the magnitude of the RTP data packet, and the first multimedia file is a multimedia file that is transmitted before the target multimedia file.

In some embodiments of this application, the apparatus further includes:
a second receiving module, configured to receive packet loss rates transmitted by a plurality of terminals; and
a third sending module, configured to send information about at least one terminal satisfying a second condition to the first terminal, where the second condition includes that each of the packet loss rates is less than or equal to a second preset threshold.

It should be noted that the apparatus embodiment is an apparatus corresponding to the above the data transmission method embodiment applied to the server side. All of the implementations of the above method embodiment are applicable to the apparatus embodiment, and can achieve the same technical effects.

The data transmission apparatus in this embodiment of this application may be an apparatus having an operating system. The operating system may be Android (Android), IOS, or another possible operating system. This is not specifically limited in this embodiment of this application.

The data transmission apparatus provided in this embodiment of this application can implement the processes implemented in the method embodiment of FIG. 6.

Optionally, as shown in FIG. 11, an embodiment of this application further provides a server 1100. The server includes a processor 1101, a memory 1102, programs or instructions stored in the memory 1102 and executable by the processor 1101. The programs or the instructions, when executed by the processor 1101, implement the processes of the data transmission method embodiment applied to the server side, and can achieve the same technical effects. To avoid repetition, details are not described herein again.

An embodiment of this application further provides a chip. The chip includes a processor and a communication interface. The communication interface is coupled to the processor. The processor is configured to run a program or instructions, to implement the processes of the data transmission method embodiments, and can achieve the same technical effects. To avoid repetition, details are not described herein again.

An embodiment of this application further provides a computer program product. The computer program product is stored in a storage medium. The computer program product is executed by at least one processor to implement the processes of the data transmission method embodiments, and can achieve the same technical effects. To avoid repetition, details are not described herein again.

It should be understood that the chip in this embodiment of this application may also be referred to as a system level chip, a system chip, a chip system, a system on chip, or the like.

It should be noted that the term "comprise", "include" or any other variant herein is intended to encompass non-exclusive inclusion, so that a process, a method, an article, or an apparatus including a series of elements not only includes those elements, but also includes another element not listed explicitly, or includes intrinsic elements for the process, the method, the article, or the apparatus. Without any further limitation, an element defined by the phrase "include one ..." does not exclude existence of an additional same element in the process, the method, the article, or the apparatus that includes the element. In addition, it should be noted that the scope of the method and the apparatus in the implementations of this application is not limited to function execution in the order shown or discussed, and may further include function execution in a substantially simultaneous manner or in the opposite order based on the involved functions. For example, the described method may be performed in an order different from the described order, and various steps may be added, omitted, or combined. In addition, features described with reference to some examples may be combined in another example.

According to the descriptions of the above implementations, a person skilled in the art may clearly learn that the above method embodiments may be implemented by software with a necessary universal hardware platform, or may be implemented by hardware. However, in many cases, the software with a universal hardware platform is a preferred implementation. Based on such an understanding, the technical solutions of this application, in essence, or a part contributing to the prior art may be embodied in a form of a computer software product. The computer software product is stored in a storage medium (such as a ROM/RAM, a magnetic disk, or an optical disc), including a plurality of instructions for causing a terminal (which may be a mobile phone, a computer, a server, a network device, or the like) to perform the methods in embodiments of this application.

Although embodiments of this application are described above with reference to the drawings, this application is not limited to the specific implementations described above. The above specific implementations are merely illustrative rather than restrictive.

## Claims

1. A decoding method, performed by a first terminal, the method comprises:
receiving (201) a plurality of real-time transport protocol, RTP, data packets of a target multimedia file sent by a server, wherein a protocol header of each of the RTP data packets carries a shared code corresponding to the RTP data packet, the shared code is used for indicating an arrangement sequence number of the RTP data packet in the target multimedia file, and the shared code corresponding to the RTP data packet is determined by the server based on an initial value of an obtained shared code corresponding to the target multimedia file;
sending (202), in a case that it is determined that the RTP data packets do not comprise a first RTP data packet of the target multimedia file sent by the server, a shared code of the first RTP data packet to a second terminal; and
receiving (203) the first RTP data packet, and inserting the first RTP data packet into a cache to decode the target multimedia file, wherein the first RTP data packet is sent by the second terminal based on the shared code of the first RTP data packet, wherein
the first terminal and the second terminal jointly receive the RTP data packets of the target multimedia file sent by the server;
the method further comprising:
establishing a connection with the second terminal in a case that a packet loss rate of the first terminal satisfies a first condition, wherein the first condition comprises that the packet loss rate is greater than or equal to a first preset threshold;
**characterized in that**
wherein the establishing a connection with the second terminal in a case that a packet loss rate of the first terminal satisfies a first condition comprises:
receiving information about at least one terminal sent by the server, wherein a packet loss rate of each of the at least one terminal is less than or equal to a second preset threshold;
selecting the second terminal from the at least one terminal in a case that the packet loss rate of the first terminal satisfies the first condition; and
establishing the connection with the second terminal.

2. The method according to claim 1, wherein the sending (202), in a case that it is determined that the RTP data packets do not comprise a first RTP data packet of the target multimedia file sent by the server, a shared code of the first RTP data packet to a second terminal comprises:
determining, based on the plurality of received RTP data packets of the target multimedia file sent by the server, whether the first RTP data packet has not been received; and
sending the shared code of the first RTP data packet to the second terminal in a case that the first RTP data packet has not been received.

3. The method according to claim 2, wherein the determining whether the first RTP data packet has not been received comprises:
determining, based on the shared codes of the plurality of received RTP data packets, that an unreceived first RTP data packet exists in a case that the shared codes of the plurality of RTP packets are not consecutive.

4. A data transmission method, performed by a server, wherein the method comprises:
obtaining (601) an initial value of a shared code corresponding to a target multimedia file;
determining (602) a shared code corresponding to each of a plurality of real-time transport protocol, RTP, data packets of the target multimedia file based on the initial value of the shared code; and
sending (603) the plurality of RTP data packets of the target multimedia file to a first terminal and a second terminal, wherein
a protocol header of the RTP data packet carries a shared code corresponding to the RTP data packet, and the shared code is used for indicating an arrangement sequence number of the RTP data packet in the target multimedia file;
**characterized in that**
the method further comprises:
receiving packet loss rates transmitted by a plurality of terminals, wherein the plurality of terminals receive the RTP data packets of the target multimedia file sent by the server; and
sending, to the first terminal, information about at least one terminal satisfying a second condition, wherein the second condition comprises that each of the packet loss rates is less than or equal to a second preset threshold.

5. The method according to claim 4, wherein the obtaining (601) an initial value of a shared code corresponding to a target multimedia file comprises:
determining the initial value of the shared code corresponding to the target multimedia file based on an initial value of a shared code corresponding to a first multimedia file, a magnitude of a data block of the target multimedia file, a magnitude of the RTP data packet, and a first coefficient, wherein
the first coefficient is determined by the magnitude of the data block of the target multimedia file and the magnitude of the RTP data packet, and the first multimedia file is a multimedia file that is transmitted before the target multimedia file.

6. A decoding apparatus (700), performed by a first terminal, wherein the decoding apparatus comprises:
a first receiving module (701), configured to receive a plurality of real-time transport protocol, RTP, data packets of a target multimedia file sent by a server, wherein a protocol header of each of the RTP data packets carries a shared code corresponding to the RTP data packet, the shared code is used for indicating an arrangement sequence number of the RTP data packet in the target multimedia file, and the shared code corresponding to the RTP data packet is determined by the server based on an initial value of an obtained shared code corresponding to the target multimedia file;
a first sending module (702), configured to send, in a case that it is determined that the RTP data packets do not comprise a first RTP data packet of the target multimedia file sent by the server, a shared code of the first RTP data packet to a second terminal; and
a decoding module (703), configured to receive the first RTP data packet, and insert the first RTP data packet into a cache to decode the target multimedia file, wherein the first RTP data packet is sent by the second terminal based on the shared code of the first RTP data packet, wherein
the first terminal and the second terminal jointly receive the RTP data packets of the target multimedia file sent by the server;
the apparatus further comprising:
a connecting module, configured to establish a connection with the second terminal in a case that a packet loss rate of the first terminal satisfies a first condition, wherein the first condition comprises that the packet loss rate is greater than or equal to a first preset threshold;
**characterized in that** the connecting module comprises:
a receiving unit, configured to receive information about at least one terminal sent by the server, wherein a packet loss rate of each of the at least one terminal is less than or equal to a second preset threshold;
a selection unit, configured to select the second terminal from the at least one terminal in a case that the packet loss rate of the first terminal satisfies the first condition; and
an establishing unit, configured to establish the connection with the second terminal.

7. The apparatus (700) according to claim 6, wherein the first sending module (702) comprises:
a determining unit, configured to determine, based on the plurality of received RTP data packets of the target multimedia file sent by the server, whether the first RTP data packet has not been received; and
a sending unit, configured to send the shared code of the first RTP data packet to the second terminal in a case that the first RTP data packet has not been received.

8. The apparatus (700) according to claim 7, wherein the determining unit is configured to:
determine, based on the shared codes of the plurality of received RTP data packets, that an unreceived first RTP data packet exists in a case that the shared codes of the plurality of RTP packets are not consecutive.

9. A data transmission apparatus (1000), performed by a server, wherein the data transmission apparatus comprises:
an obtaining module (1001), configured to obtain an initial value of a shared code corresponding to a target multimedia file;
a determining module (1002), configured to determine a shared code corresponding to each of a plurality of real-time transport protocol, RTP, data packets of the target multimedia file based on the initial value of the shared code; and
a second sending module (1003), configured to send the plurality of RTP data packets of the target multimedia file to a first terminal and a second terminal, wherein
a protocol header of the RTP data packet carries a shared code corresponding to the RTP data packet, and the shared code is used for indicating an arrangement sequence number of the RTP data packet in the target multimedia file;
**characterized in that**
the apparatus further comprising:
a second receiving module, configured to receive packet loss rates transmitted by a plurality of terminals, wherein the plurality of terminals receive the RTP data packets of the target multimedia file sent by the server; and
a third sending module, configured to send, to the first terminal, information about at least one terminal satisfying a second condition, wherein the second condition comprises that each of the packet loss rates is less than or equal to a second preset threshold.

10. The apparatus (1000) according to claim 9, wherein the obtaining module (1001) is configured to:
determine the initial value of the shared code corresponding to the target multimedia file based on an initial value of a shared code corresponding to a first multimedia file, a magnitude of a data block of the target multimedia file, a magnitude of the RTP data packet, and a first coefficient, wherein
the first coefficient is determined by the magnitude of the data block of the target multimedia file and the magnitude of the RTP data packet, and the first multimedia file is a multimedia file that is transmitted before the target multimedia file.

## Patentansprüche

1. Ein Decodierverfahren, durchgeführt durch ein erstes Endgerät, das Verfahren umfassend:
Empfangen (201) einer Vielzahl von Echtzeit-Transportprotokoll-, RTP-, Datenpaketen einer Ziel-Multimediadatei gesendet von einem Server, wobei ein Protokollkopf jedes der RTP-Datenpakete einen dem RTP-Datenpaket entsprechenden gemeinsamen Code trägt, der gemeinsame Code zum Angeben einer Anordnungssequenznummer des RTP-Datenpakets in der Ziel-Multimedia-datei verwendet wird, und der dem RTP-Datenpaket entsprechende gemeinsame Code durch den Server basierend auf einem Anfangswert eines erhaltenen der Ziel-Multimediadatei entsprechenden gemeinsamen Codes bestimmt wird;
Senden (202), in einem Fall, dass bestimmt wird, dass die RTP-Datenpakete kein erstes RTP-Datenpaket der durch den Server gesendeten Ziel-Multimediadatei umfassen, eines gemeinsamen Codes des ersten RTP-Datenpakets an ein zweites Endgerät; und
Empfangen (203) des ersten RTP-Datenpakets, und Einfügen des ersten RTP-Datenpakets in einen Cache zum Decodieren der Ziel-Multimediadatei, wobei das erste RTP-Datenpaket gesendet wird von dem zweiten Endgerät basierend auf dem gemeinsamen Code des ersten RTP-Datenpakets, wobei
das erste Endgerät und das zweite Endgerät gemeinsam die RTP-Datenpakete der Ziel- Multimediadatei gesendet von dem Server empfangen;
das Verfahren ferner umfassend:
Festlegen einer Verbindung mit dem zweiten Endgerät in einem Fall, dass eine Paketverlustrate des ersten Endgeräts eine erste Bedingung erfüllt, wobei die erste Bedingung umfasst, dass die Paketverlustrate größer oder gleich einem ersten voreingestellten Schwellenwert ist;
**dadurch gekennzeichnet, dass**
wobei das Festlegen einer Verbindung mit dem zweiten Endgerät in einem Fall, dass eine verlustrate des ersten Endgeräts eine erste Bedingung erfüllt, Folgendes umfasst:
Empfangen von Informationen über mindestens ein Endgerät gesendet von dem Server, wobei eine Paketverlustrate jedes der mindestens einen Endgeräte kleiner oder gleich einem zweiten voreingestellten Schwellenwert ist;
Auswählen des zweiten Endgeräts aus dem mindestens einen Endgerät in einem Fall, dass die Paketverlust-rate des ersten Endgeräts die erste Bedingung erfüllt; und
Festlegen der Verbindung mit dem zweiten Endgerät.

2. Verfahren nach Anspruch 1, wobei das Senden (202), in einem Fall, dass bestimmt wird, dass die RTP-Datenpakete kein erstes RTP-Datenpaket der, von dem Server gesendeten, Ziel- Multimediadatei umfassen, eines gemeinsamen Codes des ersten RTP-Datenpakets an ein zweites Endgerät Folgendes umfasst:
Bestimmen, basierend auf der Vielzahl von empfangenen RTP-Datenpaketen der Ziel-Multimediadatei gesendet von dem Server, ob das erste RTP-Datenpaket nicht empfangen worden ist; und
Senden des gemeinsamen Codes des ersten RTP-Datenpakets an das zweite Endgerät in einem Fall, dass das erste RTP-Datenpaket nicht empfangen worden ist.

3. Das Verfahren nach Anspruch 2, wobei das Bestimmen, ob das erste RTP-Datenbpaket nicht empfangen worden ist, Folgendes umfasst:
Bestimmen, basierend auf den gemeinsamen Codes der Vielzahl von empfangenen RTP-Datenpaketen, dass ein nicht empfangenes erstes RTP-Datenpaket existiert in einem Fall, dass die gemeinsamen Codes der Vielzahl von RTP- Paketen nicht aufeinanderfolgend sind.

4. Ein Datenübertragungsverfahren, durchgeführt durch einen Server, wobei das Verfahren Folgendes umfasst:
Erhalten (601) eines Anfangswerts eines gemeinsamen Codes entsprechend einer Ziel-Multimediadatei;
Bestimmen (602) eines gemeinsamen Codes entsprechend jedem aus einer Vielzahl von Echtzeittransport- protokoll-, RTP-, Datenpaketen der Ziel-Multimediadatei basierend auf dem Anfangswert des gemeinsamen Codes; und
Senden (603) der Vielzahl von RTP-Datenpaketen der Ziel-Multimediadatei an ein erstes Endgerät und ein zweites Endgerät, wobei
ein Protokollkopf des RTP-Datenpakets einen gemeinsamen Code entsprechend dem RTP- Datenpaket trägt, und der gemeinsame Code zum Anzeigen einer Anordnungssequenznummer des RTP-Datenpakets in der Ziel-Multimediadatei verwendet wird;
**dadurch gekennzeichnet, dass**
das Verfahren ferner Folgendes umfasst:
Empfangen von Paketverlustraten, übertragen durch eine Vielzahl von Endgeräten, die die RTP-Datenpakete der Ziel-Multimediadatei gesendet durch den Server empfangen;
und Senden, an das erste Endgerät, Informationen über mindestens ein Endgerät, das eine zweite Bedingung erfüllt,
wobei die zweite Bedingung umfasst, dass jede der Paketverlustraten kleiner oder gleich einem zweiten voreingestellten Schwellenwert ist.

5. Das Verfahren nach Anspruch 4, wobei das Erhalten (601) eines Anfangswerts eines gemeinsamen Codes entsprechend einer Ziel-Multimediadatei Folgendes umfasst:
Bestimmen des Anfangswerts des gemeinsamen Codes entsprechend der Ziel-Multimedia Datei basierend auf einem Anfangswert eines gemeinsamen Codes entsprechend einer ersten Multimediadatei, einer Größe eines Datenblocks der Ziel-Multimediadatei, einer Größe des RTP-Datenpakets, und einem ersten Koeffizienten, wobei
der erste Koeffizient durch die Größe des Datenblocks der Ziel- Multimediadatei und die Größe des RTP-Datenpakets bestimmt wird, und die erste Multimediadatei eine Multimediadatei ist, die vor der Ziel-Multimediadatei übertragen wird.

6. Eine Decodiervorrichtung (700), durchgeführt durch ein erstes Endgerät, wobei die Decodiervorrichtung Folgendes umfasst:
ein erstes Empfangsmodul (701), das konfiguriert ist, eine Mehrzahl von EchtzeitTransport protokoll-, RTP-, Datenpaketen einer Ziel-Multimediadatei zu empfangen, die von einem Server gesendet werden, wobei ein Protokoll Header jedes der RTP-Datenpakete einen gemeinsamen Code trägt, der dem RTP-Datenpaket entspricht, der gemeinsame Code zum Angeben einer Anordnungssequenznummer des RTP-Datenpakets in der Ziel-Multimediadatei verwendet wird, und der gemeinsame Code entsprechend dem RTP-Datenpaket durch den Server basierend auf einem Anfangswert eines erhaltenen gemeinsamen Codes entsprechend der Ziel-Multimediadatei bestimmt wird;
ein erstes Sendemodul (702), das konfiguriert ist, in einem Fall, dass bestimmt wird, dass die RTP-Datenpakete kein erstes RTP-Datenpaket der Ziel-Multimediadatei umfassen, das gesendet von dem Server ist, einen gemeinsamen Code des ersten RTP-Datenpakets an ein zweites Endgerät zu senden; und
ein Decodiermodul (703), das konfiguriert ist, das erste RTP-Datenpaket zu empfangen und das erste RTP-Datenpaket in einen Cache einzufügen, um die Ziel-Multimediadatei zu decodieren, wobei das erste RTP- Datenpaket von dem zweiten Endgerät basierend auf dem gemeinsamen Code des ersten RTP-Datenpakets gesendet wird, wobei
das erste Endgerät und das zweite Endgerät gemeinsam die RTP-Datenpakete der Ziel-Multimediadatei empfangen, die durch den Server gesendet werden;
die Vorrichtung ferner umfassend:
ein Verbindungsmodul, das konfiguriert ist, eine Verbindung mit dem zweiten Endgerät in einem Fall festzulegen, dass eine Paketverlustrate des ersten Endgeräts eine erste Bedingung erfüllt, wobei die erste Bedingung umfasst, dass die Paketverlustrate größer oder gleich einem ersten voreingestellten Schwellenwert ist;
**dadurch gekennzeichnet, dass**
das Verbindungsmodul Folgendes umfasst:
eine Empfangseinheit, die dazu konfiguriert ist, Informationen über mindestens ein Endgerät, gesendet von dem Server, zu empfangen, wobei eine Paketverlustrate jedes des mindestens einen Endgeräts kleiner oder gleich einem zweiten voreingestellten Schwellenwert ist;
eine Auswahleinheit, die dazu konfiguriert ist, das zweite Endgerät aus dem mindestens einen Endgerät in einem Fall auszuwählen, dass die Paketverlustrate des ersten Endgeräts die erste Bedingung erfüllt; und
eine Festlegungseinheit, die dazu konfiguriert ist, die Verbindung mit dem zweiten Endgerät festzulegen.

7. Die Vorrichtung (700) nach Anspruch 6, wobei das erste Sendemodul (702) Folgendes umfasst:
eine Bestimmungseinheit, die dazu konfiguriert ist, basierend auf den mehreren empfangenen RTP-Datenpaketen der Ziel-Multimediadatei, gesendet von dem Server, zu bestimmen, ob das erste RTP-Datenpaket nicht empfangen worden ist; und
eine Sendeeinheit, die dazu konfiguriert ist, den gemeinsamen Code des ersten RTP-Datenpakets an das zweite Endgerät in einem Fall zu senden, dass das erste RTP-Datenpaket nicht empfangen worden ist.

8. Die Vorrichtung (700) nach Anspruch 7, wobei die Bestimmungseinheit dazu konfiguriert ist zum:
Bestimmen, basierend auf den gemeinsamen Codes der mehreren empfangenen RTP-Datenpakete, dass ein nicht empfangenes erstes RTP-Datenpaket in einem Fall existiert, dass die gemeinsamen Codes der mehreren RTP- Pakete nicht aufeinanderfolgend sind.

9. Eine Datenübertragungsvorrichtung (1000), durchgeführt durch einen Server, wobei die Datenübertragungsvorrichtung Folgendes umfasst:
ein Erhaltungsmodul (1001), das dazu konfiguriert ist, einen Anfangswert eines gemeinsamen Codes entsprechend einer Ziel-Multimediadatei zu erhalten;
ein Bestimmungsmodul (1002), das dazu konfiguriert ist, einen gemeinsamen Code entsprechend jedem von mehreren Echtzeit-Transportprotokoll-, RTP-, Datenpaketen der Ziel-Multimediadatei basierend auf dem Anfangswert des gemeinsamen Codes zu bestimmen; und
ein zweites Sendemodul (1003), das dazu konfiguriert ist, die mehreren RTP-Datenpakete der Ziel-Multimediadatei an ein erstes Endgerät und ein zweites Endgerät zu senden, wobei
ein Protokoll-Header des RTP-Datenpakets einen entsprechenden gemeinsamen Code des RTP-Datenpakets trägt, und der gemeinsame Code zum Angeben einer Anordnungssequenznummer des RTP-Datenpakets in der Ziel-Multimediadatei verwendet wird;
**dadurch gekennzeichnet, dass**
wobei die Vorrichtung ferner Folgendes umfasst:
ein zweites Empfangsmodul, konfiguriert, um Paketverlustraten zu empfangen, die von einer Mehrzahl von Endgeräten übertragen werden, wobei die Mehrzahl von Endgeräten die RTP-Datenpakete der Ziel-Multimediadatei empfangen, die durch den Server gesendet wird; und
ein drittes Sendemodul, konfiguriert, um, an das erste Endgerät,
Informationen über mindestens ein Endgerät zu senden,
das eine zweite Bedingung erfüllt, wobei die zweite Bedingung umfasst, dass jede der Paketverlustraten kleiner oder gleich einem zweiten voreingestellten Schwellenwert ist.

10. Die Vorrichtung (1000) nach Anspruch 9, wobei das Erhaltungsmodul (1001) zu Folgendem konfiguriert ist:
Bestimmen des Anfangswerts des gemeinsamen Codes entsprechend der Ziel-Multimediadatei basierend auf einem Anfangswert eines gemeinsamen Codes entsprechend einer ersten Multimediadatei, einer Größe eines Datenblocks der Ziel-Multimediadatei, einer Größe des RTP-Datenpakets und einem ersten Koeffizienten, wobei
der erste Koeffizient durch die Größe des Datenblocks der Ziel-Multimediadatei und die Größe des RTP-Datenpakets bestimmt wird, und die erste Multimediadatei eine Multimediadatei ist, die vor der Ziel-Multimediadatei übertragen wird.

## Revendications

1. Un procédé de décodage, effectué par un premier terminal, le procédé comprend :
la réception (201) d'une pluralité de paquets de données de protocole de transport en temps réel, RTP, d'un fichier multimédia cible envoyé par un serveur, dans lequel un en-tête de protocole de chacun des paquets de données RTP porte un code partagé correspondant au paquet de données RTP, le code partagé est utilisé pour indiquer un numéro de séquence d'agencement du paquet de données RTP dans le fichier multimédia cible, et le code partagé correspondant au paquet de données RTP est déterminé par le serveur sur la base d'une valeur initiale d'un code partagé obtenu correspondant au fichier multimédia cible ;
l'envoi (202), dans un cas où il est déterminé que les paquets de données RTP ne comprennent pas un premier paquet de données RTP du fichier multimédia cible envoyé par le serveur, d'un code partagé du premier paquet de données RTP à un deuxième terminal ; et
la réception (203) du premier paquet de données RTP, et l'insertion du premier paquet de données RTP dans une mémoire cache pour décoder le fichier multimédia cible, dans lequel le premier paquet de données RTP est envoyé par le deuxième terminal sur la base du code partagé du premier paquet de données RTP, dans lequel
le premier terminal et le deuxième terminal reçoivent conjointement les paquets de données RTP du fichier multimédia cible envoyé par le serveur ;
le procédé comprenant en outre :
l'établissement d'une connexion avec le deuxième terminal dans un cas où le taux de perte de paquets du premier terminal satisfait à une première condition, dans lequel la première condition comprend le fait que le taux de perte de paquets est supérieur ou égal à un premier seuil prédéfini ;
**caractérisé en ce que**
dans lequel l'établissement d'une connexion avec le deuxième terminal dans un cas où un taux de perte de paquets du premier terminal satisfait à une première condition comprend :
la réception d'informations concernant au moins un terminal envoyées par le serveur, dans lequel un taux de perte de paquets de chacun de l'au moins un terminal est inférieur ou égal à un deuxième seuil prédéfini ;
la sélection du deuxième terminal parmi l'au moins un terminal dans un cas où le taux de perte de paquets du premier terminal satisfait à la première condition ; et
l'établissement de la connexion avec le deuxième terminal.

2. Le procédé selon la revendication 1, dans lequel l'envoi (202), dans un cas où il est déterminé que les paquets de données RTP ne comprennent pas un premier paquet de données RTP du fichier multimédia cible envoyé par le serveur, d'un code partagé du premier paquet de données RTP à un deuxième terminal comprend :
déterminer, sur la base de la pluralité de paquets de données RTP reçus du fichier multimédia cible envoyé par le serveur, si le premier paquet de données RTP n'a pas été reçu; et
envoyer le code partagé du premier paquet de données RTP au deuxième terminal dans un cas où le premier paquet de données RTP n'a pas été reçu.

3. Le procédé selon la revendication 2, dans lequel la détermination de si le premier paquet de données RTP n'a pas été reçu comprend :
déterminer, sur la base des codes partagés de la pluralité de paquets de données RTP reçus, que un premier paquet de données RTP non reçu existe dans un cas où les codes partagés de la pluralité de RTP paquets ne sont pas consécutifs.

4. Un procédé de transmission de données, effectué par un serveur, dans lequel le procédé comprend :
obtenir (601) une valeur initiale d'un code partagé correspondant à un fichier multimédia cible ;
déterminer (602) un code partagé correspondant à chacun d'une pluralité de paquets de données de protocole de transport en temps réel, RTP, du fichier multimédia cible sur la base de la valeur initiale du code partagé ; et
envoyer (603) la pluralité de paquets de données RTP du fichier multimédia cible à un premier terminal et un deuxième terminal, dans lequel
un en-tête de protocole du paquet de données RTP porte un code partagé correspondant au paquet de données RTP, et le code partagé est utilisé pour indiquer un numéro de séquence d'agencement du paquet de données RTP dans le fichier multimédia cible ;
**caractérisé en ce que**
le procédé comprend en outre :
recevoir des taux de perte de paquets transmis par une pluralité de terminaux, dans lequel la pluralité de terminaux reçoit les paquets de données RTP du fichier multimédia cible envoyés par le serveur ; et
envoyer, au premier terminal,
des informations concernant au moins un terminal satisfaisant une deuxième condition , dans lequel la deuxième condition comprend que chacun des taux de perte de paquets est inférieur à ou égal à un deuxième seuil prédéfini.

5. Le procédé selon la revendication 4, dans lequel l'obtention (601) d'une valeur initiale d'un le code partagé correspondant à un fichier multimédia cible comprend :
la détermination de la valeur initiale du code partagé correspondant au fichier multimédia cible sur la base d'une valeur initiale d'un code partagé correspondant à un premier fichier multimédia, d'une taille d'un bloc de données du fichier multimédia cible, d'une taille du paquet de données RTP, et d'un premier coefficient, dans lequel
le premier coefficient est déterminé par la taille du bloc de données du fichier multimédia cible et la taille du paquet de données RTP, et le premier fichier multimédia est un fichier multimédia qui est transmis avant le fichier multimédia cible.

6. Un appareil de décodage (700), effectué par un premier terminal, dans lequel l'appareil de décodage comprend :
un premier module de réception (701), configuré pour recevoir une pluralité de paquets de données de protocole de transport en temps réel, RTP, d'un fichier multimédia cible envoyés par un serveur, dans lequel un en-tête de protocole de chacun des paquets de données RTP porte un code partagé correspondant au paquet de données RTP, le code partagé est utilisé pour indiquer un numéro de séquence d'agencement du paquet de données RTP dans le fichier multimédia cible, et le code partagé correspondant au paquet de données RTP est déterminé par le serveur sur la base d'une valeur initiale d'un code partagé obtenu correspondant au fichier multimédia cible ;
un premier module d'envoi (702), configuré pour envoyer, dans un cas où il est déterminé que les paquets de données RTP ne comprennent pas un premier paquet de données RTP du fichier multimédia cible envoyé par le serveur, un code partagé du premier paquet de données RTP à un deuxième terminal ; et
un module de décodage (703), configuré pour recevoir le premier paquet de données RTP, et insérer le premier paquet de données RTP dans un cache pour décoder le fichier multimédia cible, dans lequel le premier paquet de données RTP est envoyé par le deuxième terminal sur la base du code partagé du premier paquet de données RTP, dans lequel
le premier terminal et le deuxième terminal reçoivent conjointement les paquets de données RTP du fichier multimédia cible envoyé par le serveur ;
l'appareil comprenant en outre :
un module de connexion, configuré pour établir une connexion avec le deuxième terminal dans un cas où un taux de perte de paquets du premier terminal satisfait à une première condition, dans lequel la première condition comprend que le taux de perte de paquets est supérieur ou égal à un premier seuil prédéfini ;
**caractérisé en ce que**
le module de connexion comprend :
une unité de réception, configurée pour recevoir des informations concernant au moins un terminal envoyées par le serveur, dans lequel un taux de perte de paquets de chacun de l'au moins un terminal est inférieur ou égal à un second seuil prédéfini ;
une unité de sélection, configurée pour sélectionner le deuxième terminal parmi l'au moins un terminal dans un cas où le taux de perte de paquets du premier terminal satisfait à la première condition ; et
une unité d'établissement, configurée pour établir la connexion avec le deuxième terminal.

7. L'appareil (700) selon la revendication 6, dans lequel le premier module d'envoi (702) comprend :
une unité de détermination, configurée pour déterminer, sur la base de la pluralité de paquets de données RTP reçus du fichier multimédia cible envoyé par le serveur, si le premier paquet de données RTP n'a pas été reçu ; et
une unité d'envoi, configurée pour envoyer le code partagé du premier paquet de données RTP au deuxième terminal dans un cas où le premier paquet de données RTP n'a pas été reçu.

8. L'appareil (700) selon la revendication 7, dans lequel l'unité de détermination est configurée pour :
déterminer, sur la base des codes partagés de la pluralité de paquets de données RTP reçus, que un premier paquet de données RTP non reçu existe dans un cas où les codes partagés de la pluralité de paquets RTP ne sont pas consécutifs.

9. Un appareil de transmission de données (1000), effectué par un serveur, dans lequel l'appareil de transmission de données comprend :
un module d'obtention (1001), configuré pour obtenir une valeur initiale d'un code partagé correspondant à un fichier multimédia cible ;
un module de détermination (1002), configuré pour déterminer un code partagé correspondant à chacun d'une pluralité de paquets de données de protocole de transport en temps réel, RTP, du fichier multimédia cible sur la base de la valeur initiale du code partagé ; et
un second module d'envoi (1003), configuré pour envoyer la pluralité de paquets de données RTP du fichier multimédia cible à un premier terminal et à un deuxième terminal, dans lequel
un en-tête de protocole du paquet de données RTP porte un code partagé correspondant au paquet de données RTP, et le code partagé est utilisé pour indiquer un numéro de séquence d'agencement du paquet de données RTP dans le fichier multimédia cible ;
**caractérisé en ce que**
l'appareil comprenant en outre :
un deuxième module de réception, configuré pour recevoir des taux de perte de paquets transmis par une pluralité de terminaux, dans lequel la pluralité de terminaux reçoit les paquets de données RTP du fichier multimédia cible envoyé par le serveur ; et
un troisième module d'envoi, configuré pour envoyer, au premier terminal,
des informations concernant au moins un terminal satisfaisant une deuxième condition, dans laquelle la deuxième condition comprend que chacun des taux de perte de paquets est inférieur ou égal à un deuxième seuil prédéfini.

10. L'appareil (1000) selon la revendication 9, dans lequel le module d'obtention (1001) est configuré pour :
déterminer la valeur initiale du code partagé correspondant au fichier multimédia cible sur la base d'une valeur initiale d'un code partagé correspondant à un premier fichier multimédia, d'une grandeur d'un bloc de données du fichier multimédia cible, d'une grandeur du paquet de données RTP, et d'un premier coefficient, dans lequel
le premier coefficient est déterminé par la grandeur du bloc de données du fichier multimédia cible et la grandeur du paquet de données RTP, et le premier fichier multimédia est un fichier multimédia qui est transmis avant le fichier multimédia cible.
